# EUROPEAN PATENT SPECIFICATION

(11) **EP 3 255 897 B1**
(45) Date of publication and mention of the grant of the patent: **17.02.2021**
(21) Application number: 15892093.4
(22) Date of filing: 15.05.2015
(51) Int. Cl.: H04M 9/08, H04R 1/10, H04R 5/04, G10K 11/178

(54) **METHOD AND TERMINAL FOR CONFIGURING NOISE REDUCTION EARPHONE, AND NOISE REDUCTION EARPHONE**
VERFAHREN UND ENDGERÄT ZUR KONFIGURIERUNG EINES LÄRMREDUZIERENDEN OHRHÖRERS SOWIE LÄRMREDUZIERENDER OHRHÖRER
PROCÉDÉ ET TERMINAL PERMETTANT DE CONFIGURER UN ÉCOUTEUR À RÉDUCTION DU BRUIT ET ÉCOUTEUR À RÉDUCTION DE BRUIT

(43) Date of publication of application: 13.12.2017
(73) Proprietor: Huawei Technologies Co. Ltd., Shenzhen, Guangdong 518129 (CN)
(72) Inventor: YUAN, Yao, Shenzhen Guangdong 518129 (CN); PENG, Zhonghui, Shenzhen Guangdong 518129 (CN)
(74) Representative: Gill Jennings & Every LLP
(86) International application number: PCT/CN2015/079030
(87) International publication number: WO 2016/183712

(56) References cited:
- EP-A1- 2 587 833
- EP-A1- 2 779 685
- WO-A1-2015/034735
- WO-A2-2013/143971
- CN-A- 102 291 643
- CN-A- 103 024 632
- CN-A- 103 945 293
- CN-U- 203 135 124
- CN-U- 204 305 316
- US-A1- 2005 276 421
- US-A1- 2012 140 941

## Description

### TECHNICAL FIELD

Embodiments of the present invention relate to audio processing technologies, and in particular, to a noise reduction headset setting method, a terminal, and a noise reduction headset.

### BACKGROUND

For a noise reduction headset, a dedicated noise reduction circuit is provided in the headset, and generally an audio receiver (for example, a mini microphone) and an anti-noise output chip are used to receive and analyze a frequency of ambient noise and generate a reverse frequency of the frequency of the ambient noise for mutual attenuation or cancellation, thereby suppressing noise.

However, when a noise reduction headset leaves the factory, internal firmware, an audio parameter for noise reduction, and the like of the noise reduction headset are all fixed and unchangeable, and a noise reduction range cannot be flexibly adjusted, reducing practicability of the noise reduction headset.

EP 2587833 A1 describes a headset with two-way multiplexed communication.

WO 2015/034735 A1 describes an approach for configuring active noise cancellation coefficients.

### SUMMARY

Embodiments of the present invention provide a noise reduction headset setting method, a terminal, and a noise reduction headset, to flexibly adjust a noise reduction range of a noise reduction headset, and improve practicability of the noise reduction headset.

Aspects of the invention are set out in the claims.

By means of the noise reduction headset setting method, the terminal, and the noise reduction headset in the embodiments of the present invention, by extending lines of a headset jack of a terminal and a plug of a noise reduction headset, data communication between the terminal and the noise reduction headset is implemented, a problem that internal firmware, an audio parameter for noise reduction, and the like of a noise reduction headset are all fixed and unchangeable when the noise reduction headset leaves the factory is resolved, a noise reduction range of the noise reduction headset is flexibly adjusted, and practicability of the noise reduction headset is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of an embodiment of a noise reduction headset setting method according to the present invention;
FIG. 2 is a flowchart of another embodiment of a noise reduction headset setting method according to the present invention;
FIG. 3 is a schematic structural diagram of an embodiment of a terminal according to the present invention;
FIG. 4 is a schematic structural diagram of another embodiment of a terminal according to the present invention;
FIG. 5 is a schematic structural diagram of an embodiment of a noise reduction headset according to the present invention;
FIG. 6 is a schematic diagram of connection between a terminal and a noise reduction headset according to the present invention; and
FIG. 7A to FIG. 7C are schematic diagrams of interfaces of a mobile phone according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

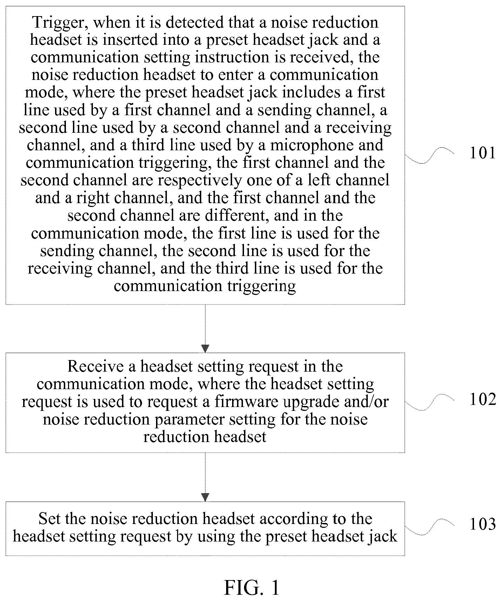

FIG. 1 is a flowchart of an embodiment of a noise reduction headset setting method according to the present invention. As shown in FIG. 1, the method in this embodiment may include the following steps.

Step 101: Trigger, when it is detected that a noise reduction headset is inserted into a preset headset jack and a communication setting instruction is received, the noise reduction headset to enter a communication mode, where the preset headset jack includes a first line used by a first channel and a sending channel, a second line used by a second channel and a receiving channel, and a third line used by a microphone and communication triggering, the first channel and the second channel are respectively one of a left channel and a right channel, and the first channel and the second channel are different, and in the communication mode, the first line is used for the sending channel, the second line is used for the receiving channel, and the third line is used for the communication triggering.

This embodiment may be executed by a terminal, and the terminal may be, for example, a mobile phone or a tablet computer. The terminal may be used as the terminal in this embodiment provided that the terminal has a function of outputting audio by using a headset jack. A headset with a microphone generally has four sections, including a left channel, a right channel, a ground line, and a microphone. Correspondingly, a headset jack of a terminal also includes the foregoing four lines matching the headset. To implement the method in this embodiment, the original lines of the headset jack of the terminal may be extended. A first line may be used to transmit left channel audio and send data, a second line may be used to transmit right channel audio and receive data, and a third line may be used to control the microphone and trigger communication. Correspondingly, to match the line extension of the headset jack, lines of a plug of a noise reduction headset also need to be extended, including a first line used to transmit left channel audio and receive data, a second line used to transmit right channel audio and send data, and a third line used to control the microphone and trigger communication. In addition, in this embodiment, the first line in the headset jack of the terminal may also be a line used by right channel audio and a sending channel, and the second line may also be a line used by left channel audio and a receiving channel. That is, which lines and how the lines are specifically used for left and right channels and a data channel are not specifically limited for the headset jack and the plug of the noise reduction headset, and the headset jack and the plug of the noise reduction headset may be applicable in the present invention provided that the headset jack and the plug of the noise reduction headset are provided with a data transmission function, and data transmission channels are corresponding. In this way, in addition to outputting audio by using the headset jack, the terminal may also perform data communication with the noise reduction headset by using the headset jack to set a noise reduction range of the noise reduction headset, and may perform a firmware upgrade on the noise reduction headset. For the noise reduction headset, a dedicated noise reduction circuit is provided in the headset, and generally an audio receiver (for example, a mini microphone) and an anti-noise output chip are used to receive and analyze a frequency of ambient noise and generate a reverse frequency of the frequency of the ambient noise for mutual attenuation or cancellation, thereby suppressing noise. The terminal detects that the noise reduction headset is inserted into the foregoing headset jack having the extended function, and receives a communication setting instruction. The communication setting instruction may be an instruction that is generated when a user activates a headset setting function or starts an application program on the terminal, or may be a level signal that conforms to a preset trigger state and that is generated when the user exerts a short press or a long press on a corresponding button on the noise reduction headset. Before the terminal receives the communication setting instruction, audio is transmitted between the terminal and the noise reduction headset, and after receiving the communication setting instruction, the terminal triggers the noise reduction headset to enter a communication mode. Specifically, the terminal may enable a communication triggering function on the third line, and trigger, by using this line, the noise reduction headset to enter the communication mode. That is, the first line is enabled as a sending channel, and the second line is enabled as a receiving channel. In this case, both the terminal and the noise reduction headset start a communication mode.

Step 102: Receive a headset setting request in the communication mode, where the headset setting request is used to request a firmware upgrade and/or noise reduction parameter setting for the noise reduction headset.

In the communication mode, the terminal may perform data transmission with the noise reduction headset based on the extended lines of the headset jack. In this way, after receiving the headset setting request that is input by the user by using a human-machine interaction module of the terminal, the terminal may communicate with the noise reduction headset according to the headset setting request. The headset setting request may be that the user requests firmware of the noise reduction headset to be upgraded, or may be that the user directly inputs an audio range intended to be reduced, a noise reduction level for a noise reduction environment, or the like. These may all be used as a basis for noise reduction headset upgrade or noise reduction range adjustment. It should be noted that, for the headset setting request, in addition to the foregoing several types of content, all information that may be used to indicate a noise reduction audio range of the noise reduction headset may be used as the headset setting request in this embodiment. This is not specifically limited herein.

Step 103: Set the noise reduction headset according to the headset setting request by using the preset headset jack.

The terminal device sets the noise reduction headset by using the extended lines of the headset jack, including sending firmware for update to the noise reduction headset so that the noise reduction headset locally installs the firmware for update to implement an upgrade, also including transmitting a noise reduction parameter to the noise reduction headset so that the noise reduction headset flexibly adjusts a noise reduction range according to the noise reduction parameter.

In this embodiment, by extending lines of a headset jack of a terminal and a plug of a noise reduction headset, data communication between the terminal and the noise reduction headset is implemented, a problem that internal firmware, an audio parameter for noise reduction, and the like of a noise reduction headset are all fixed and unchangeable when the noise reduction headset leaves the factory is resolved, a noise reduction range of the noise reduction headset is flexibly adjusted, and practicability of the noise reduction headset is improved.

Further, a specific implementation method for triggering, when it is detected that a noise reduction headset is inserted into a preset headset jack and a communication setting instruction is received, the noise reduction headset to enter a communication mode in step 101 in the foregoing method embodiment may be: when it is detected that the noise reduction headset is inserted into the preset headset jack and the communication setting instruction is received, outputting, according to the communication setting instruction by using the third line, a level signal conforming to a preset trigger state, and triggering, after the level signal is output for a preset trigger time, the noise reduction headset to enter the communication mode.

Specifically, when enabled for the communication triggering function, the third line may be a level input circuit. When detecting that the noise reduction headset is inserted into the headset jack, the terminal automatically suspends all applications occupying the left and right audio channels of the headset jack, and then continuously inputs a high level on the third line. After the high level is input for the preset trigger time, the first lines and the second lines in the headset jack and the plug of the noise reduction headset are all switched to a data transmission channel, and the terminal and the noise reduction headset are both ready for data transmission and enter the communication mode. The preset trigger time in this embodiment may be, for example, 2s. That is, after continuously inputting a high level on the third line for 2s, the terminal may trigger the noise reduction headset to enter the communication mode. A specific value of the preset trigger time is not specifically limited.

Further, when the headset setting request includes a firmware upgrade request, a specific implementation method for setting the noise reduction headset according to the headset setting request by using the preset headset jack in step 103 in the foregoing method embodiment may be: obtaining a model of the noise reduction headset and a current firmware version of the noise reduction headset according to the firmware upgrade request; and if it is found, through searching according to the model of the noise reduction headset and the current firmware version of the noise reduction headset, that there is firmware for update corresponding to the model of the noise reduction headset, downloading the firmware for update, and sending the firmware for update to the noise reduction headset by using the sending channel.

Specifically, the user inputs, by using a touch-sensitive surface of the terminal, the request for upgrading the noise reduction headset, and the terminal reads the current model and a number of the used firmware version of the noise reduction headset according to the request, and then the terminal may automatically query online whether there is firmware for update corresponding to the model of the noise reduction headset. Herein, the terminal may obtain, by accessing a server, a website, or the like of a provider of the noise reduction headset, the firmware for update. If there is firmware for update, the terminal may prompt, by using a display screen, the user to download online the firmware for update, and after downloading the firmware for update, transmit the firmware for update to the noise reduction headset by using the sending channel.

Further, when the headset setting request includes noise reduction parameter information, a specific implementation method for setting the noise reduction headset according to the headset setting request by using the preset headset jack in step 103 in the foregoing method embodiment may be: sending a noise reduction level in the noise reduction parameter information to the noise reduction headset by using the sending channel, so that the noise reduction headset filters noise according to the noise reduction level.

Specifically, the user inputs the noise reduction parameter information by using the touch-sensitive surface of the terminal. The noise reduction parameter information may include the noise reduction level, an audio range needing to be filtered out, and the like. For example, eight levels in total: 0 to 7 are provided in a setting menu. The eight levels respectively correspond to causing the noise reduction headset to filter out sounds lower than 0 db, 15 db, 20 db, 25 db, 30 db, 35 db, 40 db, 45 db, and 50 db. After the user selects a noise reduction level, the terminal may directly send a noise reduction range corresponding to the level to the noise reduction headset, or may directly send the level to the noise reduction headset, and the noise reduction headset filters out audio of a corresponding frequency according to the level.

Further, when the headset setting request includes an application scenario, and the application scenario may include, for example, at home, on a road, or on a bus, a specific implementation method for setting the noise reduction headset according to the headset setting request by using the preset headset jack in step 103 in the foregoing method embodiment may be: sending a preset noise reduction level corresponding to the application scenario to the noise reduction headset by using the sending channel, so that the noise reduction headset filters noise according to the preset noise reduction level.

Specifically, the user inputs a current environment by using the touch-sensitive surface of the terminal. For different environments, different noise reduction ranges, levels, or the like may be set for the noise reduction headset. For example, it is relatively quiet at home, and sounds from family around need to be heard, and the user sets the application scenario to home, and the terminal adjusts a noise reduction level corresponding to the scenario to 0, which is equivalent to turning off a noise reduction effect, so that the user does not neglect ambient sounds while enjoying a music effect. When the user is walking on a road, low frequency noise needs to be filtered out, but for safety, sounds from horns of vehicles around cannot be neglected, and the user sets the application scenario to outdoor, and the terminal adjusts a noise reduction level corresponding to the scenario to 4 to filter out ambient sounds lower than 30 db, so that the user keeps safety in mind while enjoying a quiet environment. When the user is on a bus, an environment is quite noisy, and the user sets the application scenario to public place, and the terminal adjusts a noise reduction level corresponding to the scenario to 7 to filter out ambient sounds lower than 50 db, so that substantially all noise is completely filtered out. Further, when the headset setting request includes noise reduction parameter information, a specific implementation method for setting the noise reduction headset according to the headset setting request by using the preset headset jack in step 103 in the foregoing method embodiment may be: sending an audio intensity curve in the noise reduction parameter information to the noise reduction headset by using the sending channel, so that the noise reduction headset adjusts audio intensity of a corresponding sound frequency band according to the audio intensity curve.

Further, the user manually adjusts the audio curve by using the touch-sensitive surface of the terminal to adjust audio intensity of sound frequency bands of the headset, and the terminal sends the audio curve to the noise reduction headset, so that the noise reduction headset adjusts audio intensity of corresponding sound frequency bands according to the audio intensity curve.

Further, after step 103 in the foregoing method embodiment, the method further includes: receiving a setting exiting request, and outputting, according to the setting exiting request by using the third line, a level signal conforming to a preset exiting state, to trigger the noise reduction headset to enter a voice mode, where in the voice mode, the first line is used for the first channel, the second line is used for the second channel, and the third line is used for the microphone.

Corresponding to entering the communication mode, after receiving the setting exiting request, the terminal may continuously input a low level on the third line, so that the first lines and the second lines in the headset jack and the plug of the noise reduction headset are switched back to the voice mode again, that is, the first lines are used for the first channel, the second lines are used for the second channel, and the third lines are used for the microphone, and the noise reduction headset performs noise filtering on ambient sounds according to previous setting.

Further, before step 101 in the foregoing method embodiment, the method further includes: displaying an interface for setting the noise reduction headset to a user, and receiving, by using the interface, the headset setting request input by the user.

In this embodiment, the user may activate, by tapping on an icon of an application, a function of setting the noise reduction headset, and the application includes the setting interface displayed to the user. Optionally, the function of setting the noise reduction headset may also be a function of the terminal, and the user sets the noise reduction headset by selecting setting content.

Further, after step 101 in the foregoing method embodiment, the method further includes: obtaining a model of the noise reduction headset and a current firmware version of the noise reduction headset; and if it is found, through searching according to the model of the noise reduction headset and the current firmware version of the noise reduction headset, that there is firmware for update corresponding to the model of the noise reduction headset, downloading the firmware for update, and sending the firmware for update to the noise reduction headset by using the sending channel.

In a process in which the terminal sets the noise reduction headset, the terminal may also actively obtain the model and the current firmware version of the noise reduction headset from the noise reduction headset, and then when there is a new version for firmware, send the firmware for upgrade to the noise reduction headset. Herein, there is no need for the user to input a headset setting request for firmware upgrade, and the terminal may automatically perform detection for upgrade.

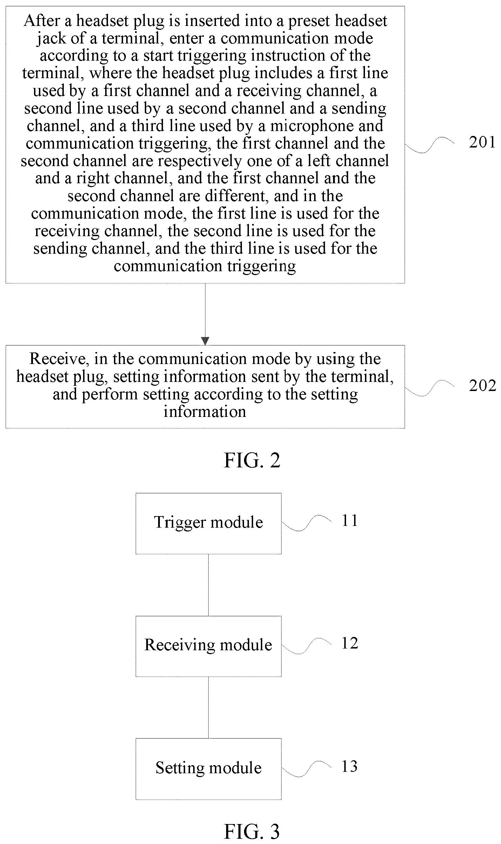

FIG. 2 is a flowchart of another embodiment of a noise reduction headset setting method according to the present invention. As shown in FIG. 2, the method in this embodiment may include the following steps.

Step 201: After a headset plug is inserted into a preset headset jack of a terminal, enter a communication mode according to a start triggering instruction of the terminal, where the headset plug includes a first line used by a first channel and a receiving channel, a second line used by a second channel and a sending channel, and a third line used by a microphone and communication triggering, the first channel and the second channel are respectively one of a left channel and a right channel, and the first channel and the second channel are different, and in the communication mode, the first line is used for the receiving channel, the second line is used for the sending channel, and the third line is used for the communication triggering.

This embodiment may be executed by the noise reduction headset in the embodiment shown in FIG. 1. The start triggering instruction may be an instruction that is generated when a user activates a headset setting function or starts an application program on the terminal, or may be a level signal that conforms to a preset trigger state and that is generated when the user exerts a short press or a long press on a corresponding button on the noise reduction headset.

Step 202: Receive, in the communication mode by using the headset plug, setting information sent by the terminal, and perform setting according to the setting information.

This embodiment is corresponding to the method embodiment shown in FIG. 1, and explains method steps on a noise reduction headset side when a terminal sets a noise reduction headset, and details are not described herein again.

In this embodiment, by extending lines of a headset jack of a terminal and a plug of a noise reduction headset, data communication between the terminal and the noise reduction headset is implemented, a problem that internal firmware, an audio parameter for noise reduction, and the like of a noise reduction headset are all fixed and unchangeable when the noise reduction headset leaves the factory is resolved, a noise reduction range of the noise reduction headset is flexibly adjusted, and practicability of the noise reduction headset is improved.

Further, a specific implementation method for receiving, in the communication mode by using the headset plug, setting information sent by the terminal, and performing setting according to the setting information in step 202 in the foregoing method embodiment may be: sending, in the communication mode, a model of the noise reduction headset and a current firmware version of the noise reduction headset to the terminal by using the sending channel; and receiving, by using the receiving channel, firmware for update sent by the terminal, and performing an upgrade according to the firmware for update.

Further, a specific implementation method for receiving, in the communication mode by using the headset plug, setting information sent by the terminal, and performing setting according to the setting information in step 202 in the foregoing method embodiment may be: receiving, in the communication mode by using the receiving channel, a noise reduction level sent by the terminal, and filtering noise according to the noise reduction level.

Further, a specific implementation method for receiving, in the communication mode by using the headset plug, setting information sent by the terminal, and performing setting according to the setting information in step 202 in the foregoing method embodiment may be: receiving, in the communication mode by using the receiving channel, an audio intensity curve sent by the terminal, and adjusting audio intensity of a corresponding sound frequency band according to the audio intensity curve.

Further, after step 202 in the foregoing method embodiment, the method further includes: entering a voice mode according to an exit triggering instruction of the terminal, where in the voice mode, the first line is used for the first channel, the second line is used for the second channel, and the third line is used for the microphone.

The exit triggering instruction may be an instruction that is generated when the user deactivates the headset setting function or closes the application program on the terminal, or may be a level signal that conforms to a preset exiting state and that is generated when the user exerts a short press or a long press on a corresponding button on the noise reduction headset.

FIG. 3 is a schematic structural diagram of an embodiment of a terminal according to the present invention. As shown in FIG. 3, the apparatus in this embodiment may include a trigger module 11, a receiving module 12, and a setting module 13. The trigger module 11 is configured to trigger, when it is detected that a noise reduction headset is inserted into a preset headset jack and a communication setting instruction is received, the noise reduction headset to enter a communication mode. The preset headset jack includes a first line used by a first channel and a sending channel, a second line used by a second channel and a receiving channel, and a third line used by a microphone and communication triggering, the first channel and the second channel are respectively one of a left channel and a right channel, and the first channel and the second channel are different, and in the communication mode, the first line is used for the sending channel, the second line is used for the receiving channel, and the third line is used for the communication triggering. The receiving module 12 is configured to receive a headset setting request in the communication mode. The headset setting request is used to request a firmware upgrade and/or noise reduction parameter setting for the noise reduction headset. The setting module 13 is configured to set the noise reduction headset according to the headset setting request by using the preset headset jack.

The apparatus in this embodiment may be configured to execute the technical solution of the method embodiment shown in FIG. 1, and implementation principles and technical effects thereof are similar, and details are not described herein again.

Further, the trigger module 11 is specifically configured to: when it is detected that the noise reduction headset is inserted into the preset headset jack and the communication setting instruction is received, output, according to the communication setting instruction by using the third line, a level signal conforming to a preset trigger state, and trigger, after the level signal is output for a preset trigger time, the noise reduction headset to enter the communication mode.

Further, the headset setting request includes a firmware upgrade request, and the setting module 13 is specifically configured to: obtain a model of the noise reduction headset and a current firmware version of the noise reduction headset according to the firmware upgrade request; and if it is found, through searching according to the model of the noise reduction headset and the current firmware version of the noise reduction headset, that there is firmware for update corresponding to the model of the noise reduction headset, download the firmware for update, and send the firmware for update to the noise reduction headset by using the sending channel.

Further, the headset setting request includes noise reduction parameter information, and the setting module 13 is specifically configured to send a noise reduction level in the noise reduction parameter information to the noise reduction headset by using the sending channel, so that the noise reduction headset filters noise according to the noise reduction level.

Further, the headset setting request includes an application scenario, and the setting module 13 is specifically configured to send a preset noise reduction level corresponding to the application scenario to the noise reduction headset by using the sending channel, so that the noise reduction headset filters noise according to the preset noise reduction level.

Further, the headset setting request includes noise reduction parameter information, and the setting module 13 is specifically configured to send an audio intensity curve in the noise reduction parameter information to the noise reduction headset by using the sending channel, so that the noise reduction headset adjusts audio intensity of a corresponding sound frequency band according to the audio intensity curve.

Further, the trigger module 11 is further configured to: receive a setting exiting request, and output, according to the setting exiting request by using the third line, a level signal conforming to a preset exiting state, to trigger the noise reduction headset to enter a voice mode, where in the voice mode, the first line is used for the first channel, the second line is used for the second channel, and the third line is used for the microphone.

Further, the setting module 13 is further configured to: obtain a model of the noise reduction headset and a current firmware version of the noise reduction headset; and if it is found, through searching according to the model of the noise reduction headset and the current firmware version of the noise reduction headset, that there is firmware for update corresponding to the model of the noise reduction headset, download the firmware for update, and send the firmware for update to the noise reduction headset by using the sending channel.

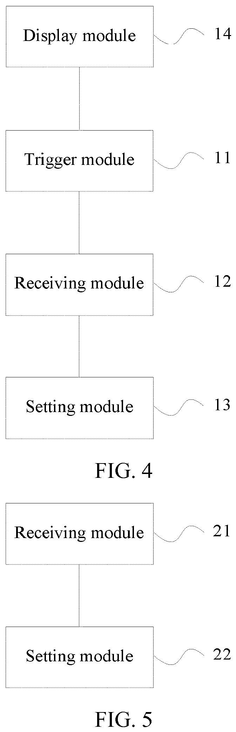

FIG. 4 is a schematic structural diagram of another embodiment of a terminal according to the present invention. As shown in FIG. 4, based on the apparatus structure shown in FIG. 3, the apparatus in this embodiment may further include: a display module 14, configured to: display an interface for setting the noise reduction headset to a user, and receive, by using the interface, the headset setting request input by the user.

The apparatus in this embodiment may be configured to execute the technical solution of the method embodiment shown in FIG. 1, and implementation principles and technical effects thereof are similar, and details are not described herein again.

FIG. 5 is a schematic structural diagram of an embodiment of a noise reduction headset according to the present invention. As shown in FIG. 5, the apparatus in this embodiment may include a receiving module 21 and a setting module 22. The receiving module 21 is configured to: after a headset plug is inserted into a preset headset jack of a terminal, enable, according to a start triggering instruction of the terminal, the noise reduction headset to enter a communication mode. The headset plug includes a first line used by a first channel and a receiving channel, a second line used by a second channel and a sending channel, and a third line used by a microphone and communication triggering, the first channel and the second channel are respectively one of a left channel and a right channel, and the first channel and the second channel are different, and in the communication mode, the first line is used for the receiving channel, the second line is used for the sending channel, and the third line is used for the communication triggering. The setting module 22 is configured to: receive, in the communication mode by using the headset plug, setting information sent by the terminal, and perform setting according to the setting information.

The apparatus in this embodiment may be configured to execute the technical solution of the method embodiment shown in FIG. 2, and implementation principles and technical effects thereof are similar, and details are not described herein again.

Further, the setting module 22 is specifically configured to: send, in the communication mode, a model of the noise reduction headset and a current firmware version of the noise reduction headset to the terminal by using the sending channel; and receive, by using the receiving channel, firmware for update sent by the terminal, and perform an upgrade according to the firmware for update.

Further, the setting module 22 is specifically configured to: receive, in the communication mode by using the receiving channel, a noise reduction level sent by the terminal, and filter noise according to the noise reduction level.

Further, the setting module 22 is specifically configured to: receive, in the communication mode by using the receiving channel, an audio intensity curve sent by the terminal, and adjust audio intensity of a corresponding sound frequency band according to the audio intensity curve.

Further, the receiving module 21 is further configured to: receive an exit triggering instruction of the terminal, and enable, according to the exit triggering instruction, the noise reduction headset to enter a voice mode, where in the voice mode, the first line is used for the left channel, the second line is used for the right channel, and the third line is used for the microphone.

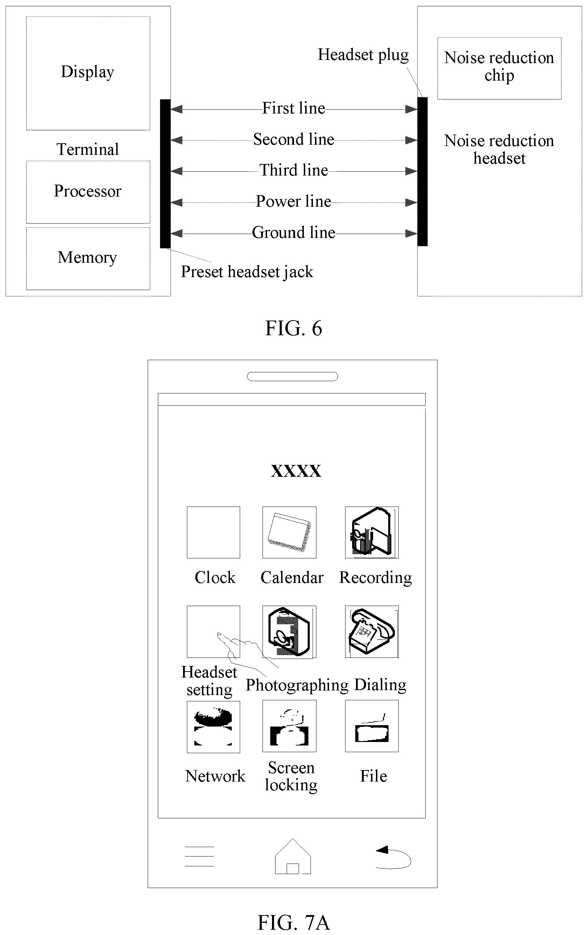

FIG. 6 is a schematic diagram of connection between a terminal and a noise reduction headset according to the present invention. As shown in FIG. 6, the terminal in this embodiment includes a processor, a preset headset jack, a display, and a memory. The display includes a touch-sensitive surface and a display screen; the memory is configured to store one or more application programs; the preset headset jack includes a first line used by a first channel and a sending channel, a second line used by a second channel and a receiving channel, and a third line used by a microphone and communication triggering, the first channel and the second channel are respectively one of a left channel and a right channel, and the first channel and the second channel are different, and when the preset headset jack is in a communication mode, the first line is used for the sending channel, the second line is used for the receiving channel, and the third line is used for the communication triggering. The processor may execute the technical solution of the method embodiment shown in FIG. 1, and implementation principles and technical effects thereof are similar, and details are not described herein again. The preset headset jack further includes a power line and a ground line. The one or more application programs include an application program for setting a noise reduction headset, and the display is configured to display an interface of the application program for setting a noise reduction headset to a user.

The noise reduction headset includes a headset plug and a noise reduction chip. The headset plug includes a first line used by a first channel and a receiving channel, a second line used by a second channel and a sending channel, and a third line used by a microphone and communication triggering, the first channel and the second channel are respectively one of a left channel and a right channel, and the first channel and the second channel are different, and when the noise reduction headset is in a communication mode, the first line is used for the receiving channel, the second line is used for the sending channel, and the third line is used for the communication triggering. The noise reduction chip may execute the technical solution of the method embodiment shown in FIG. 2, and implementation principles and technical effects thereof are similar, and details are not described herein again. The headset plug also includes a power line and a ground line.

The foregoing memory may be a computer readable storage medium storing one or more application programs. The one or more application programs include an instruction, and when executed by a terminal including a display and multiple application programs, the instruction causes the terminal to execute the technical solution in the method embodiment shown in FIG. 1, and details are not described herein again.

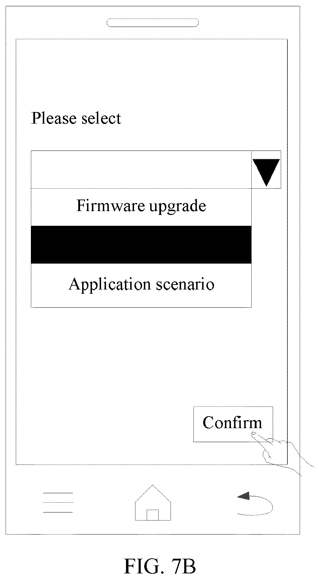

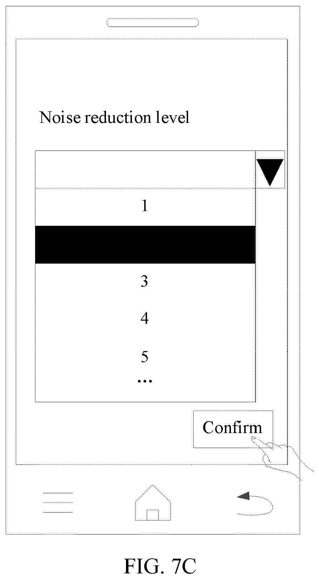

As an example, a noise reduction headset is set on a mobile phone. FIG. 7A to FIG. 7C are schematic diagrams of interfaces of a mobile phone according to the present invention. In FIG. 7A, a user taps on an icon of an application program for setting a noise reduction headset on the mobile phone. After the application program is started, as shown in FIG. 7B, a setting option menu is displayed on a display of the mobile phone. The setting option menu includes firmware upgrade, noise reduction parameter, and application scenario, and is used by the user to tap on one of the options, for example, the noise reduction parameter. In FIG. 7C, the user may select one from a level menu on the display. Optionally, an audio intensity curve may be directly input.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A noise reduction headset setting method, **characterized by** comprising:
triggering (101), by a terminal, when it is detected that a noise reduction headset is inserted into a preset headset jack of the terminal and a communication setting instruction is received, the noise reduction headset to enter a communication mode, wherein the preset headset jack comprises a first line used by a first channel and a sending channel, a second line used by a second channel and a receiving channel, and a third line used by a microphone and communication triggering, the first channel and the second channel are respectively one of a left channel and a right channel, and the first channel and the second channel are different, and in the communication mode, the first line is used for the sending channel, the second line is used for the receiving channel, and the third line is used for the communication triggering;
receiving (102), by the terminal, a headset setting request in the communication mode, wherein the headset setting request is used to request a firmware upgrade and/or noise reduction parameter setting for the noise reduction headset; and
setting (103), by the terminal, the noise reduction headset according to the headset setting request by using the preset headset jack.

2. The method according to claim 1, wherein the triggering, when it is detected that a noise reduction headset is inserted into a preset headset jack and a communication setting instruction is received, the noise reduction headset to enter a communication mode comprises:
when it is detected that the noise reduction headset is inserted into the preset headset jack and the communication setting instruction is received, outputting, according to the communication setting instruction by using the third line, a level signal conforming to a preset trigger state, and triggering, after the level signal is output for a preset trigger time, the noise reduction headset to enter the communication mode.

3. The method according to claim 1 or 2, wherein the headset setting request comprises a firmware upgrade request, and
the setting the noise reduction headset according to the headset setting request by using the preset headset jack comprises:
obtaining a model of the noise reduction headset and a current firmware version of the noise reduction headset according to the firmware upgrade request; and
if it is found, through searching according to the model of the noise reduction headset and the current firmware version of the noise reduction headset, that there is firmware for update corresponding to the model of the noise reduction headset, downloading the firmware for update, and sending the firmware for update to the noise reduction headset by using the sending channel.

4. The method according to any one of claims 1 to 3, wherein the headset setting request comprises noise reduction parameter information, and
the setting the noise reduction headset according to the headset setting request by using the preset headset jack comprises:
sending a noise reduction level in the noise reduction parameter information to the noise reduction headset by using the sending channel, so that the noise reduction headset filters noise according to the noise reduction level.

5. The method according to any one of claims 1 to 3, wherein the headset setting request comprises an application scenario, and
the setting the noise reduction headset according to the headset setting request by using the preset headset jack comprises:
sending a preset noise reduction level corresponding to the application scenario to the noise reduction headset by using the sending channel, so that the noise reduction headset filters noise according to the preset noise reduction level.

6. The method according to any one of claims 1 to 3, wherein the headset setting request comprises noise reduction parameter information, and
the setting the noise reduction headset according to the headset setting request by using the preset headset jack comprises:
sending an audio intensity curve in the noise reduction parameter information to the noise reduction headset by using the sending channel, so that the noise reduction headset adjusts audio intensity of a corresponding sound frequency band according to the audio intensity curve.

7. The method according to any one of claims 1 to 6, wherein after the setting the noise reduction headset according to the headset setting request by using the preset headset jack, the method further comprises:
receiving a setting exiting request, and outputting, according to the setting exiting request by using the third line, a level signal conforming to a preset exiting state, to trigger the noise reduction headset to enter a voice mode, wherein in the voice mode, the first line is used for the first channel, the second line is used for the second channel, and the third line is used for the microphone.

8. The method according to any one of claims 1 to 7, wherein before the triggering, when it is detected that a noise reduction headset is inserted into a preset headset jack and a communication setting instruction is received, the noise reduction headset to enter a communication mode, the method further comprises:
displaying an interface for setting the noise reduction headset to a user, and receiving, by using the interface, the headset setting request input by the user.

9. The method according to claim 1, wherein after the triggering, when it is detected that a noise reduction headset is inserted into a preset headset jack and a communication setting instruction is received, the noise reduction headset to enter a communication mode, the method further comprises:
obtaining a model of the noise reduction headset and a current firmware version of the noise reduction headset; and
if it is found, through searching according to the model of the noise reduction headset and the current firmware version of the noise reduction headset, that there is firmware for update corresponding to the model of the noise reduction headset, downloading the firmware for update, and sending the firmware for update to the noise reduction headset by using the sending channel.

10. A noise reduction headset setting method, **characterized by** comprising:
after a headset plug of a noise reduction headset is inserted into a preset headset jack of a terminal, entering (201), by the noise reduction headset, a communication mode according to a start triggering instruction of the terminal, wherein the headset plug comprises a first line used by a first channel and a receiving channel, a second line used by a second channel and a sending channel, and a third line used by a microphone and communication triggering, the first channel and the second channel arc respectively one of a left channel and a right channel, and the first channel and the second channel are different, and in the communication mode, the first line is used for the receiving channel, the second line is used for the sending channel, and the third line is used for the communication triggering; and
receiving (202), by the noise reduction headset, in the communication mode by using the headset plug, setting information sent by the terminal, and performing setting of the noise reduction headset according to the setting information.

11. The method according to claim 10, wherein the receiving, in the communication mode by using the headset plug, setting information sent by the terminal, and performing setting according to the setting information comprises:
sending, in the communication mode, a model of the noise reduction headset and a current firmware version of the noise reduction headset to the terminal by using the sending channel; and
receiving, by using the receiving channel, firmware for update sent by the terminal, and performing an upgrade according to the firmware for update.

12. The method according to claim 10 or 11, wherein the receiving, in the communication mode by using the headset plug, setting information sent by the terminal, and performing setting according to the setting information comprises:
receiving, in the communication mode by using the receiving channel, a noise reduction level sent by the terminal, and filtering noise according to the noise reduction level.

13. The method according to claim 10 or 11, wherein the receiving, in the communication mode by using the headset plug, setting information sent by the terminal, and performing setting according to the setting information comprises:
receiving, in the communication mode by using the receiving channel, an audio intensity curve sent by the terminal, and adjusting audio intensity of a corresponding sound frequency band according to the audio intensity curve.

14. A terminal, comprising:
a trigger module (11), configured to trigger, when it is detected that a noise reduction headset is inserted into a preset headset jack of the terminal and a communication setting instruction is received, the noise reduction headset to enter a communication mode, wherein the preset headset jack comprises a first line used by a first channel and a sending channel, a second line used by a second channel and a receiving channel, and a third line used by a microphone and communication triggering, the first channel and the second channel are respectively one of a left channel and a right channel, and the first channel and the second channel are different, and in the communication mode, the first line is used for the sending channel, the second line is used for the receiving channel, and the third line is used for the communication triggering;
a receiving module (12), configured to receive a headset setting request in the communication mode, wherein the headset setting request is used to request a firmware upgrade and/or noise reduction parameter setting for the noise reduction headset; and
a setting module (13), configured to set the noise reduction headset according to the headset setting request by using the preset headset jack.

## Patentansprüche

1. Verfahren zum Einstellen eines Kopfhörers mit Geräuschminderung, **dadurch gekennzeichnet, dass** es umfasst:
Auslösen (101), durch ein Endgerät, wenn detektiert wird, dass ein Kopfhörer mit Geräuschminderung in eine voreingestellte Kopfhörerbuchse des Endgeräts eingesetzt wird und eine Kommunikationseinstellungsanweisung empfangen wird, eines Eintretens des Kopfhörers mit Geräuschminderung in einen Kommunikationsmodus, wobei die voreingestellte Kopfhörerbuchse eine erste Leitung, die durch einen ersten Kanal und einen Sendekanal verwendet wird, eine zweite Leitung, die durch einen zweiten Kanal und einen Empfangskanal verwendet wird, und eine dritte Leitung, die durch ein Mikrofon und eine Kommunikationsauslösung verwendet wird, umfasst, wobei der erste Kanal und der zweite Kanal jeweils einer eines linken Kanals und eines rechten Kanals sind, und der erste Kanal und der zweite Kanal unterschiedlich sind, und wobei in dem Kommunikationsmodus die erste Leitung für den Sendekanal verwendet wird, die zweite Leitung für den Empfangskanal verwendet wird und die dritte Leitung für die Kommunikationsauslösung verwendet wird;
Empfangen (102), durch das Endgerät, einer Kopfhörereinstellungsanforderung in dem Kommunikationsmodus, wobei die Kopfhörereinstellungsanforderung verwendet wird, um ein Firmwareupgrade und/oder eine Geräuschminderungsparametereinstellung für den Kopfhörer mit Geräuschminderung anzufordern; und
Einstellen (103), durch das Endgerät, des Kopfhörers mit Geräuschminderung gemäß der Kopfhörereinstellungsanforderung unter Verwenden der voreingestellten Kopfhörerbuchse.

2. Verfahren nach Anspruch 1, wobei das Auslösen, wenn detektiert wird, dass ein Kopfhörer mit Geräuschminderung in eine voreingestellte Kopfhörerbuchse eingesetzt wird und eine Kommunikationseinstellungsanweisung empfangen wird, eines Eintretens des Kopfhörers mit Geräuschminderung in einen Kommunikationsmodus umfasst:
wenn detektiert wird, dass der Kopfhörer mit Geräuschminderung in die voreingestellte Kopfhörerbuchse eingesetzt wird und die Kommunikationseinstellungsanweisung empfangen wird, Ausgeben, gemäß der Kommunikationseinstellungsanweisung unter Verwenden der dritten Leitung, eines Pegelsignals, das mit einem voreingestellten Auslösezustand übereinstimmt, und Auslösen, nachdem das Pegelsignal für eine voreingestellte Auslösezeit ausgegeben wird, eines Eintretens des Kopfhörers mit Geräuschminderung in den Kommunikationsmodus.

3. Verfahren nach Anspruch 1 oder 2, wobei die Kopfhörereinstellungsanforderung eine Firmwareupgradeanforderung umfasst, und
wobei das Einstellen des Kopfhörers mit Geräuschminderung gemäß der Kopfhörereinstellungsanforderung unter Verwenden der voreingestellten Kopfhörerbuchse umfasst:
Abrufen eines Modells des Kopfhörers mit Geräuschminderung und einer aktuellen Firmwareversion des Kopfhörers mit Geräuschminderung gemäß der Firmwareupgradeanforderung; und
wenn durch Suchen gemäß dem Modell des Kopfhörers mit Geräuschminderung und der aktuellen Firmwareversion des Kopfhörers mit Geräuschminderung festgestellt wird, dass es eine Firmware zur Aktualisierung entsprechend dem Modell des Kopfhörers mit Geräuschminderung gibt, Herunterladen der Firmware zur Aktualisierung, und Senden der Firmware zur Aktualisierung an den Kopfhörer mit Geräuschminderung unter Verwenden des Sendekanals.

4. Verfahren nach einem der Ansprüche 1 bis 3, wobei die Kopfhörereinstellungsanforderung eine Geräuschminderungsparameterinformation umfasst, und
wobei das Einstellen des Kopfhörers mit Geräuschminderung gemäß der Kopfhörereinstellungsanforderung unter Verwenden der voreingestellten Kopfhörerbuchse umfasst:
Senden eines Geräuschminderungspegels in der Geräuschminderungsparameterinformation an den Kopfhörer mit Geräuschminderung unter Verwenden des Sendekanals, sodass der Kopfhörer mit Geräuschminderung Geräusche gemäß dem Geräuschminderungspegel filtert.

5. Verfahren nach einem der Ansprüche 1 bis 3, wobei die Kopfhörereinstellungsanforderung ein Anwendungsszenario umfasst, und
wobei das Einstellen des Kopfhörers mit Geräuschminderung gemäß der Kopfhörereinstellungsanforderung unter Verwenden der voreingestellten Kopfhörerbuchse umfasst:
Senden eines dem Anwendungsszenario entsprechenden voreingestellten Geräuschminderungspegels an den Kopfhörer mit Geräuschminderung unter Verwenden des Sendekanals, sodass der Kopfhörer mit Geräuschminderung Geräusche gemäß dem voreingestellten Geräuschminderungspegel filtert.

6. Verfahren nach einem der Ansprüche 1 bis 3, wobei die Kopfhörereinstellungsanforderung eine Geräuschminderungsparameterinformation umfasst, und
wobei das Einstellen des Kopfhörers mit Geräuschminderung gemäß der Kopfhörereinstellungsanforderung unter Verwenden der voreingestellten Kopfhörerbuchse umfasst:
Senden einer Audiointensitätskurve in der Geräuschminderungsparameterinformation an den Kopfhörer mit Geräuschminderung unter Verwenden des Sendekanals, sodass der Kopfhörer mit Geräuschminderung eine Audiointensität eines entsprechenden Schallfrequenzbands gemäß der Audiointensitätskurve anpasst.

7. Verfahren nach einem der Ansprüche 1 bis 6, wobei nach dem Einstellen des Kopfhörers mit Geräuschminderung gemäß der Kopfhörereinstellungsanforderung unter Verwenden der voreingestellten Kopfhörerbuchse das Verfahren ferner umfasst: Empfangen einer Einstellungsbeendigungsanforderung, und Ausgeben, gemäß der Einstellungsbeendigungsanforderung unter Verwenden der dritten Leitung, eines Pegelsignals, das mit einem voreingestellten Beendigungszustand übereinstimmt, um ein Eintreten des Kopfhörers mit Geräuschminderung in einen Sprachmodus auszulösen, wobei in dem Sprachmodus die erste Leitung für den ersten Kanal verwendet wird, die zweite Leitung für den zweiten Kanal verwendet wird und die dritte Leitung für das Mikrofon verwendet wird.

8. Verfahren nach einem der Ansprüche 1 bis 7, wobei vor dem Auslösen, wenn detektiert wird, dass ein Kopfhörer mit Geräuschminderung in eine voreingestellte Kopfhörerbuchse eingesetzt wird und eine Kommunikationseinstellungsanweisung empfangen wird, eines Eintretens des Kopfhörers mit Geräuschminderung in einen Kommunikationsmodus das Verfahren ferner umfasst:
Anzeigen einer Schnittstelle zum Einstellen des Kopfhörers mit Geräuschminderung für einen Benutzer, und Empfangen, unter Verwenden der Schnittstelle, der Kopfhörereinstellungsanforderungseingabe durch den Benutzer.

9. Verfahren nach Anspruch 1, wobei nach dem Auslösen, wenn detektiert wird, dass ein Kopfhörer mit Geräuschminderung in eine voreingestellte Kopfhörerbuchse eingesetzt wird und eine Kommunikationseinstellungsanweisung empfangen wird, eines Eintretens des Kopfhörers mit Geräuschminderung in einen Kommunikationsmodus das Verfahren ferner umfasst:
Abrufen eines Modells des Kopfhörers mit Geräuschminderung und einer aktuellen Firmwareversion des Kopfhörers mit Geräuschminderung; und
wenn durch Suchen gemäß dem Modell des Kopfhörers mit Geräuschminderung und der aktuellen Firmwareversion des Kopfhörers mit Geräuschminderung festgestellt wird, dass es eine Firmware zur Aktualisierung entsprechend dem Modell des Kopfhörers mit Geräuschminderung gibt, Herunterladen der Firmware zur Aktualisierung, und Senden der Firmware zur Aktualisierung an den Kopfhörer mit Geräuschminderung unter Verwenden des Sendekanals.

10. Verfahren zum Einstellen eines Kopfhörers mit Geräuschminderung, **dadurch gekennzeichnet, dass** es umfasst:
nachdem ein Kopfhörerstecker eines Kopfhörers mit Geräuschminderung in eine voreingestellte Kopfhörerbuchse eines Endgeräts eingesetzt wird, Eintreten (201), durch den Kopfhörer mit Geräuschminderung, in einen Kommunikationsmodus gemäß einer Startauslösungsanweisung des Endgeräts, wobei der Kopfhörerstecker eine erste Leitung, die durch einen ersten Kanal und einen Empfangskanal verwendet wird, eine zweite Leitung, die durch einen zweiten Kanal und einen Sendekanal verwendet wird, und eine dritte Leitung, die durch ein Mikrofon und eine Kommunikationsauslösung verwendet wird, umfasst, wobei der erste Kanal und der zweite Kanal jeweils einer eines linken Kanals und eines rechten Kanals sind, und der erste Kanal und der zweite Kanal unterschiedlich sind, und wobei in dem Kommunikationsmodus die erste Leitung für den Empfangskanal verwendet wird, die zweite Leitung für den Sendekanal verwendet wird und die dritte Leitung für die Kommunikationsauslösung verwendet wird; und
Empfangen (202), durch den Kopfhörer mit Geräuschminderung, in dem Kommunikationsmodus unter Verwenden des Kopfhörersteckers, einer durch das Endgerät gesendeten Einstellungsinformation, und Durchführen einer Einstellung des Kopfhörers mit Geräuschminderung gemäß der Einstellungsinformation.

11. Verfahren nach Anspruch 10, wobei das Empfangen, in dem Kommunikationsmodus unter Verwenden des Kopfhörersteckers, einer durch das Endgerät gesendeten Einstellungsinformation, und Durchführen einer Einstellung gemäß der Einstellungsinformation umfasst:
Senden, in dem Kommunikationsmodus, eines Modells des Kopfhörers mit Geräuschminderung und einer aktuellen Firmwareversion des Kopfhörers mit Geräuschminderung an das Endgerät unter Verwenden des Sendekanals; und
Empfangen, unter Verwenden des Empfangskanals, einer durch das Endgerät gesendeten Firmware zur Aktualisierung, und Durchführen eines Upgrades gemäß der Firmware zur Aktualisierung.

12. Verfahren nach Anspruch 10 oder 11, wobei das Empfangen, in dem Kommunikationsmodus unter Verwenden des Kopfhörersteckers, einer durch das Endgerät gesendeten Einstellungsinformation, und Durchführen einer Einstellung gemäß der Einstellungsinformation umfasst:
Empfangen, in dem Kommunikationsmodus unter Verwenden des Empfangskanals, eines durch das Endgerät gesendeten Geräuschminderungspegels, und Filtern von Geräuschen gemäß dem Geräuschminderungspegel.

13. Verfahren nach Anspruch 10 oder 11, wobei das Empfangen, in dem Kommunikationsmodus unter Verwenden des Kopfhörersteckers, einer durch das Endgerät gesendeten Einstellungsinformation, und Durchführen einer Einstellung gemäß der Einstellungsinformation umfasst:
Empfangen, in dem Kommunikationsmodus unter Verwenden des Empfangskanals, einer durch das Endgerät gesendeten Audiointensitätskurve, und Anpassen einer Audiointensität eines entsprechenden Schallfrequenzbands gemäß der Audiointensitätskurve.

14. Endgerät, umfassend:
ein Auslösemodul (11), das ausgelegt ist, wenn detektiert wird, dass ein Kopfhörer mit Geräuschminderung in eine voreingestellte Kopfhörerbuchse des Endgeräts eingesetzt wird und eine Kommunikationseinstellungsanweisung empfangen wird, ein Eintreten des Kopfhörers mit Geräuschminderung in einen Kommunikationsmodus auszulösen, wobei die voreingestellte Kopfhörerbuchse eine erste Leitung, die durch einen ersten Kanal und einen Sendekanal verwendet wird, eine zweite Leitung, die durch einen zweiten Kanal und einen Empfangskanal verwendet wird, und eine dritte Leitung, die durch ein Mikrofon und eine Kommunikationsauslösung verwendet wird, umfasst, wobei der erste Kanal und der zweite Kanal jeweils einer eines linken Kanals und eines rechten Kanals sind, und der erste Kanal und der zweite Kanal unterschiedlich sind, und wobei in dem Kommunikationsmodus die erste Leitung für den Sendekanal verwendet wird, die zweite Leitung für den Empfangskanal verwendet wird und die dritte Leitung für die Kommunikationsauslösung verwendet wird;
ein Empfangsmodul (12), das ausgelegt ist, eine Kopfhörereinstellungsanforderung in dem Kommunikationsmodus zu empfangen, wobei die Kopfhörereinstellungsanforderung verwendet wird, um ein Firmwareupgrade und/oder eine Geräuschminderungsparametereinstellung für den Kopfhörer mit Geräuschminderung anzufordern; und
ein Einstellungsmodul (13), das ausgelegt ist, den Kopfhörer mit Geräuschminderung gemäß der Kopfhörereinstellungsanforderung unter Verwenden der voreingestellten Kopfhörerbuchse einzustellen.

## Revendications

1. Procédé de réglage de casque à réduction de bruit, **caractérisé en ce qu'**il comprend de :
déclencher (101), par un terminal, lorsqu'il est détecté qu'un casque à réduction de bruit est inséré dans une prise casque prédéfinie du terminal et qu'une instruction de réglage de communication est reçue, l'entrée du casque à réduction de bruit dans un mode de communication, dans lequel la prise casque prédéfinie comprend une première ligne utilisée par un premier canal et un canal d'envoi, une deuxième ligne utilisée par un deuxième canal et un canal de réception, et une troisième ligne utilisée par un microphone et un déclenchement de communication, le premier canal et le deuxième canal sont respectivement l'un d'un canal gauche et d'un canal droit, et le premier canal et le deuxième canal sont différents, et dans le mode de communication, la première ligne est utilisée pour le canal d'envoi, la deuxième ligne est utilisée pour le canal de réception et la troisième ligne est utilisée pour le déclenchement de communication ;
recevoir (102), par le terminal, une demande de réglage de casque dans le mode de communication, dans lequel la demande de réglage de casque est utilisée pour demander une mise à jour du micrologiciel et/ou un réglage de paramètres de réduction de bruit pour le casque à réduction de bruit ; et
régler (103), par le terminal, le casque à réduction de bruit en fonction de la demande de réglage de casque en utilisant la prise casque prédéfinie.

2. Procédé selon la revendication 1, dans lequel le déclenchement, lorsqu'il est détecté qu'un casque à réduction de bruit est inséré dans une prise casque prédéfinie et qu'une instruction de réglage de communication est reçue, de l'entrée du casque à réduction de bruit dans un mode de communication comprend de :
lorsqu'il est détecté que le casque à réduction de bruit est inséré dans la prise casque prédéfinie et que l'instruction de réglage de communication est reçue, émettre, conformément à l'instruction de réglage de communication en utilisant la troisième ligne, un signal de niveau conforme à un état de déclenchement prédéfini, et déclencher, après que le signal de niveau est émis pendant un temps de déclenchement prédéfini, l'entrée du casque à réduction du bruit dans le mode de communication.

3. Procédé selon la revendication 1 ou 2, dans lequel la demande de réglage de casque comprend une demande de mise à niveau du micrologiciel, et
le réglage du casque à réduction de bruit en fonction de la demande de réglage de casque en utilisant la prise casque prédéfinie comprend de :
obtenir un modèle du casque à réduction de bruit et une version actuelle du micrologiciel du casque à réduction de bruit conformément à la demande de mise à niveau du micrologiciel ; et
s'il est trouvé, par la recherche selon le modèle du casque à réduction du bruit et la version actuelle du micrologiciel du casque à réduction du bruit, qu'il existe un micrologiciel pour la mise à jour correspondant au modèle du casque à réduction de bruit, télécharger le micrologiciel pour la mise à jour, et envoyer le micrologiciel pour la mise à jour au casque à réduction de bruit en utilisant le canal d'envoi.

4. Procédé selon l'une quelconque des revendications 1 à 3, dans lequel la demande de réglage de casque comprend des informations de paramètres de réduction de bruit, et le réglage du casque à réduction de bruit en fonction de la demande de réglage de casque en utilisant la prise casque prédéfinie comprend de :
envoyer un niveau de réduction de bruit dans les informations de paramètres de réduction de bruit au casque à réduction de bruit en utilisant le canal d'envoi, de sorte que le casque à réduction de bruit filtre le bruit en fonction du niveau de réduction de bruit.

5. Procédé selon l'une quelconque des revendications 1 à 3, dans lequel la demande de réglage de casque comprend un scénario d'application, et
le réglage du casque à réduction de bruit en fonction de la demande de réglage de casque en utilisant la prise casque prédéfinie comprend de :
envoyer un niveau de réduction de bruit prédéfini correspondant au scénario d'application au casque à réduction de bruit en utilisant le canal d'envoi, de sorte que le casque à réduction de bruit filtre le bruit en fonction du niveau de réduction de bruit prédéfini.

6. Procédé selon l'une quelconque des revendications 1 à 3, dans lequel la demande de réglage de casque comprend des informations de paramètres de réduction de bruit, et le réglage du casque à réduction de bruit en fonction de la demande de réglage de casque en utilisant la prise casque prédéfinie comprend de :
envoyer une courbe d'intensité audio dans les informations de paramètres de réduction de bruit au casque à réduction de bruit en utilisant le canal d'envoi, de sorte que le casque de réduction de bruit ajuste l'intensité audio d'une bande de fréquence sonore correspondante en fonction de la courbe d'intensité audio.

7. Procédé selon l'une quelconque des revendications 1 à 6, dans lequel après le réglage du casque à réduction de bruit selon la demande de réglage de casque en utilisant la prise casque prédéfinie, le procédé comprend en outre de :
recevoir une demande de sortie de réglage, et émettre, selon la demande de sortie de réglage en utilisant la troisième ligne, un signal de niveau conforme à un état de sortie prédéfini, pour déclencher l'entrée du casque à réduction de bruit dans un mode vocal, dans lequel, dans le mode vocal, la première ligne est utilisée pour le premier canal, la deuxième ligne est utilisée pour le deuxième canal et la troisième ligne est utilisée pour le microphone.

8. Procédé selon l'une quelconque des revendications 1 à 7, dans lequel, avant le déclenchement, lorsqu'il est détecté qu'un casque à réduction de bruit est inséré dans une prise casque prédéfinie et qu'une instruction de réglage de communication est reçue, de l'entrée du casque à réduction de bruit dans un mode de communication, le procédé comprend en outre de :
afficher une interface pour régler le casque à réduction de bruit à un utilisateur, et recevoir, en utilisant l'interface, la demande de réglage de casque entrée par l'utilisateur.

9. Procédé selon la revendication 1, dans lequel, après le déclenchement, lorsqu'il est détecté qu'un casque à réduction de bruit est inséré dans une prise casque prédéfinie et qu'une instruction de réglage de communication est reçue, de l'entrée du casque à réduction de bruit dans un mode de communication, le procédé comprend en outre de :
obtenir un modèle du casque à réduction de bruit et une version actuelle du micrologiciel du casque à réduction de bruit ; et
s'il est trouvé, par une recherche selon le modèle du casque à réduction du bruit et la version actuelle du micrologiciel du casque à réduction du bruit, qu'il existe un micrologiciel pour la mise à jour correspondant au modèle du casque à réduction du bruit, télécharger le micrologiciel pour la mise à jour, et envoyer le micrologiciel pour la mise à jour au casque à réduction de bruit en utilisant le canal d'envoi.

10. Procédé de réglage de casque à réduction de bruit, **caractérisé en ce qu'**il comprend de :
après qu'une fiche de casque d'un casque à réduction de bruit est insérée dans une prise casque prédéfinie d'un terminal, entrer (201), par le casque à réduction de bruit, dans un mode de communication selon une instruction de déclenchement de démarrage du terminal, dans lequel la fiche de casque comprend une première ligne utilisée par un premier canal et un canal de réception, une deuxième ligne utilisée par un deuxième canal et un canal d'envoi, et une troisième ligne utilisée par un microphone et un déclenchement de communication, le premier canal et le deuxième canal sont respectivement l'un d'un canal gauche et d'un canal droit, et le premier canal et le deuxième canal sont différents, et dans le mode de communication, la première ligne est utilisée pour le canal de réception, la deuxième ligne est utilisée pour le canal d'envoi et la troisième ligne est utilisée pour le déclenchement de communication ; et
recevoir (202), par le casque à réduction de bruit, dans le mode de communication en utilisant la fiche de casque, des informations de réglage envoyées par le terminal, et effectuer le réglage du casque à réduction de bruit en fonction des informations de réglage.

11. Procédé selon la revendication 10, dans lequel la réception, dans le mode de communication en utilisant la fiche de casque, d'informations de réglage envoyées par le terminal, et l'exécution du réglage selon les informations de réglage comprend de :
envoyer, dans le mode de communication, un modèle du casque à réduction de bruit et une version actuelle du micrologiciel du casque à réduction de bruit au terminal en utilisant le canal d'envoi ; et
recevoir, en utilisant le canal de réception, le micrologiciel pour la mise à jour envoyé par le terminal, et effectuer une mise à niveau selon le micrologiciel pour la mise à jour.

12. Procédé selon la revendication 10 ou 11, dans lequel la réception, dans le mode de communication en utilisant la fiche de casque, d'informations de réglage envoyées par le terminal, et l'exécution du réglage selon les informations de réglage comprend de : recevoir, dans le mode de communication en utilisant le canal de réception, un niveau de réduction de bruit envoyé par le terminal, et filtrer le bruit en fonction du niveau de réduction de bruit.

13. Procédé selon la revendication 10 ou 11, dans lequel la réception, dans le mode de communication en utilisant la fiche de casque, d'informations de réglage envoyées par le terminal, et l'exécution du réglage selon les informations de réglage comprend de :
recevoir, dans le mode de communication en utilisant le canal de réception, une courbe d'intensité audio envoyée par le terminal, et ajuster l'intensité audio d'une bande de fréquence sonore correspondante en fonction de la courbe d'intensité audio.

14. Terminal, comprenant :
un module de déclenchement (11), configuré pour déclencher, lorsqu'il est détecté qu'un casque à réduction de bruit est inséré dans une prise casque prédéfinie du terminal et qu'une instruction de réglage de communication est reçue, l'entrée du casque à réduction de bruit dans un mode de communication, dans lequel la prise casque prédéfinie comprend une première ligne utilisée par un premier canal et un canal d'envoi, une deuxième ligne utilisée par un deuxième canal et un canal de réception, et une troisième ligne utilisée par un microphone et un déclenchement de communication, le premier canal et le deuxième canal sont respectivement l'un d'un canal gauche et d'un canal droit, et le premier canal et le deuxième canal sont différents, et dans le mode de communication, la première ligne est utilisée pour le canal d'envoi, la deuxième ligne est utilisée pour le canal de réception et la troisième ligne est utilisée pour le déclenchement de communication ;
un module de réception (12), configuré pour recevoir une demande de réglage de casque dans le mode de communication, dans lequel la demande de réglage de casque est utilisée pour demander une mise à jour du micrologiciel et/ou un réglage de paramètres de réduction de bruit pour le casque à réduction de bruit ; et
un module de réglage (13), configuré pour régler le casque à réduction de bruit en fonction de la demande de réglage de casque en utilisant la prise casque prédéfinie.
